Europäisches Patentamt

European Patent Office

Office européen des brevets

(11) Veröffentlichungsnummer: **0 268 086**
**A2**

(12) **EUROPÄISCHE PATENTANMELDUNG**

(21) Anmeldenummer: **87115203.9**

(22) Anmeldetag: **17.10.87**

(51) Int. Cl.⁴ **G02C 13/00**

(30) Priorität: **15.11.86 DE 3639099**

(43) Veröffentlichungstag der Anmeldung:
**25.05.88 Patentblatt 88/21**

(84) Benannte Vertragsstaaten:
**AT BE CH DE ES FR GB IT LI NL**

(71) Anmelder: **Henkel Kommanditgesellschaft auf Aktien**
**Postfach 1100 Henkelstrasse 67**
**D-4000 Düsseldorf-Holthausen(DE)**

(72) Erfinder: **Thomas, Peter**
**Obere Rutenbeckstrasse 55**
**D-5600 Wuppertal 12(DE)**
Erfinder: **Reitz, Hans-Joachim, Dipl.-Design.**
**Gustav-Freytag-Strasse 29a**
**D-5064 Rösrath 2(DE)**
Erfinder: **Schaab, Udo, Dipl.-Ing.**
**Schiefbahner Strasse 38**
**D-4052 Korschenbroich 2(DE)**
Erfinder: **Wisotzki, Klaus-Dieter, Dipl.-Chem., Dr.**
**Wahnenmühle 4**
**D-4006 Erkrath 2(DE)**

(74) Vertreter: **Patentanwälte Meinke und Dabringhaus Dipl.-Ing. J. Meinke Dipl.-Ing. W. Dabringhaus**
**Westenhellweg 67**
**D-4600 Dortmund 1(DE)**

(54) **Vorrichtung zur Pflegebehandlung von Kontaktlinsen.**

(57) Bei einer Vorrichtung zur Pflegebehandlung von Kontaktlinsen mit einem Behälter zur Aufnahme einer Pflegeflüssigkeit und einem in den Behälter einsetzbaren, die Kontaktlinsen aufnehmenden Kontaktlinsenträger und mit Einrichtungen zur Bewegung der Pflegeflüssigkeit soll in ähnlicher Weise wie bei der Vorrichtung gemäß der älteren Patentanmeldung P 36 22 391.3 eine handhabungsfreundliche, beschleunigte sowie qualitativ verbesserte Kontaktlinsenpflege ermöglicht werden, die insbesondere ein gutes Auflösungsvermögen für in den Behälter für die Pflegeflüssigkeit eingegebene Tabletten oder Pulver aufweist und eine besonderes reinigungsintensive Bewegung der Pflegeflüssigkeit sicherstellt.

Dies wird dadurch erreicht, daß die Einrichtungen zur Bewegung der Pflegeflüssigkeit die im Behälter (4) befindliche Pflegeflüssigkeit gegen die Kontaktlinsen spritzende Düsen (21) aufweisen.

FIG.1

## "Vorrichtung zur Pflegebehandlung von Kontaktlinsen"

Die Erfindung betrifft eine Vorrichtung zur Pflegebehandlung von Kontaktlinsen mit einem Behälter zur Aufnahme einer Pflegeflüssigkeit und einem in den Behälter einsetzbaren, die Kontaktlinsen aufnehmenden Kontaktlinsenträger und mit Einrichtungen zur Bewegung der Pflegeflüssigkeit.

Bei bekannten Vorrichtungen dieser Art (DE-OS 34 10 400 und US-PS 3 623 492) wird die Bewegung der Pflegeflüssigkeit durch Drehen des die Kontaktlinsen aufnehmenden Kontaktlinsenträgers bewirkt, wobei das Drehen von Hand mittels eines drehbar gelagerten Deckelteils und eines zwischen diesem und dem Kontaktlinsenträger angeordneten Getriebes erfolgt. Die Bewegung bzw. Verwirbelung des Flüssigkeitsbades ist dabei jedoch relativ gering und dementsprechend auch die Abspülung der Kontaktlinsenoberflächen bzw. die Auflösung von Tabletten oder Pulvern in der Pflegeflüssigkeit. Auch hat sich die manuelle Betätigung in der Praxis als unbefriedigend erwiesen.

Es ist daher bereits vorgeschlagen worden (P 36 22 391.3), die Bewegung der Pflegeflüssigkeit mittels eines den Kontaktlinsenträger umgebenden zylindrischen Rührers vorzunehmen, wobei in einem mehrteiligen Gehäuse ein Behälter für die Pflegeflüssigkeit, in diesem der Kontaktlinsenträger und der Rührer, sowie in weiteren Teilen des Gehäuses ein Elektromotor, ein Getriebe und eine Batterie angeordnet sind.

Aufgabe der vorliegenden Erfindung ist die Schaffung einer weiteren Vorrichtung, welche in ähnlicher Weise wie die Vorrichtung gemäß der älteren Patentanmeldung P 36 22 391.3 eine handhabungsfreundliche, beschleunigte sowie qualitativ verbesserte Kontaktlinsenpflege ermöglicht, die insbesondere ein gutes Auflösungsvermögen für in den Behälter für die Pflegeflüssigkeit eingegebene Tabletten oder Pulver aufweist und eine besonders reinigungsintensive Bewegung der Pflegeflüssigkeit sicherstellt.

Bei einer Vorrichtung der eingangs bezeichneten Art wird diese Aufgabe gemäß der Erfindung dadurch gelöst, daß die Einrichtungen zur Bewegung der Pflegeflüssigkeit die im Behälter befindliche Pflegeflüssigkeit gegen die Kontaktlinsen spritzende Düsen aufweisen, wobei vorzugsweise die im Behälter befindliche Pflegeflüssigkeit mit Hilfe einer motorbetriebenen Pumpe umwälzbar und durch die Düsen ausspritzbar ist.

Aufgrund dieser Ausbildung wird einerseits bewirkt, daß die gesamte im Behälter befindliche Pflegeflüssigkeit ständig umgewälzt wird und dadurch alle in die Pflegeflüssigkeit eingegebenen Tabletten oder Pulver schnell und gleichmäßig aufgelöst werden und andererseits die Pflegeflüssigkeit sehr intensiv und gezielt auf die Kontaktlinsenflächen unter Erzielung einer entsprechend guten Reinigungs-bzw. Neutralisationswirkung aufgebracht wird.

Eine zweckmäßige Ausgestaltung ergibt sich dabei, wenn sich im Unterteil eines Gehäuses eine aus Pumpe und Motor bestehende Antriebseinheit und im Oberteil des Gehäuses der Behälter zur Aufnahme der Pflegeflüssigkeit befindet.

Dabei ist es besonders günstig, im Saugbereich der Pumpe eine Auflagefläche für eine Pflegetablette vorzusehen, weil dann die an der Pflegetablette vorbeigesaugte Flüssigkeit die Tablette besonders schnell auflöst.

Eine konstruktiv vorteilhafte Ausgestaltung ergibt sich dabei, wenn der Kontaktlinsenträger im Fußbereich gabelförmig ausgestaltet ist und sich oberhalb eines nach oben gerichteten Ansaugstutzens der Pumpe befindet, wobei zwischen den beiden in Ausnehmungen des Gehäuseunterteils einsetzbaren Schenkeln des Kontaktlinsenträgers die Tabletten-Auflagefläche angeordnet ist.

Empfehlenswert ist es dabei, die Tabletten-Auflagefläche mit einem siebartigen, mit Noppen versehenen Boden auszubilden, so daß einerseits verhindert wird, daß beim Auflösen bzw. Zerfallen der Tablette größere Teile derselben in die Pumpe gelangten, andererseits aber die Tablette von der zwischen den Noppen passierenden Pflegeflüssigkeit allseitig gut umströmt wird.

Ferner empfiehlt es sich, im Strom der Pflegeflüssigkeit Heizelemente anzuordnen und zwar vorzugsweise in einem trichterförmigen Einlaufbereich der Pumpe unterhalb des Noppensiebbodens der Auflagefläche und oberhalb der Pumpe, sofern dies in Abhängigkeit von der verwendeten Pflegeflüssigkeit vorteilhafte Auswirkungen auf den Reinigungsvorgang hat.

Einer zweckmäßigen und vorteilhaften Konstruktion dient es ferner, wenn die Düsen an aufrecht stehenden Schenkeln eines unten ringförmigen Düsenträgers angeordnet sind, wobei an der Außenseite der aufrecht stehenden Schenkel rinnenförmige Aussparungen ausgebildet sind, die in Verbindung mit der Innenwandung des Behälters Zuleitungen zu den Düsen bilden, wobei am unteren Ende der rinnenförmigen Aussparungen radial nach innen gerichtete Bohrungen ausgebildet sind, die zu einem umlaufenden Kanal führen, in den ein seitlicher Ausstoßstutzen der Pumpe einmündet.

Dabei kann der umlaufende Kanal zweckmäßig zwischen dem unteren ringförmigen Teil des Düsenträgers und einem Sockelteil des Gehäuseunterteils gebildet sein.

Einer einfachen Handhabung der Vorrichtung dient es ferner, wenn das Gehäuseunterteil mit der Pumpen-Motor-Einheit und das den Behälter bildende Gehäuse-Oberteil lösbar miteinander verbindbar sind, was zweckmäßig mittels einer Schraubverbindung geschieht.

Ferner kann im Oberteil des Gehäuses ein Entlüftungsventil vorgesehen sein, ebenso, wie ein Füllventil zum Einbringen von Pflegeflüssigkeit mittels einer Spraydose.

Schließlich kann der Kontaktlinsenträger oder der Düsenträger auch noch rotierbar ausgebildet sein, um die Reinigungswirkung noch weiter zu verbessern.

Dabei empfiehlt es sich dann, am Düsenträger mindestens eine Ringleitung mit ringsum gleichmäßig verteilten, gegen die Kontaktlinsen spritzenden Düsen anzuordnen, um derart zu gewährleisten, daß die Kontaktlinsen in allen Drehstellungen optimal besprüht werden.

Die Erfindung ist nachstehend anhand der Zeichnung beispielsweise näher erläutert. Diese zeigt in:

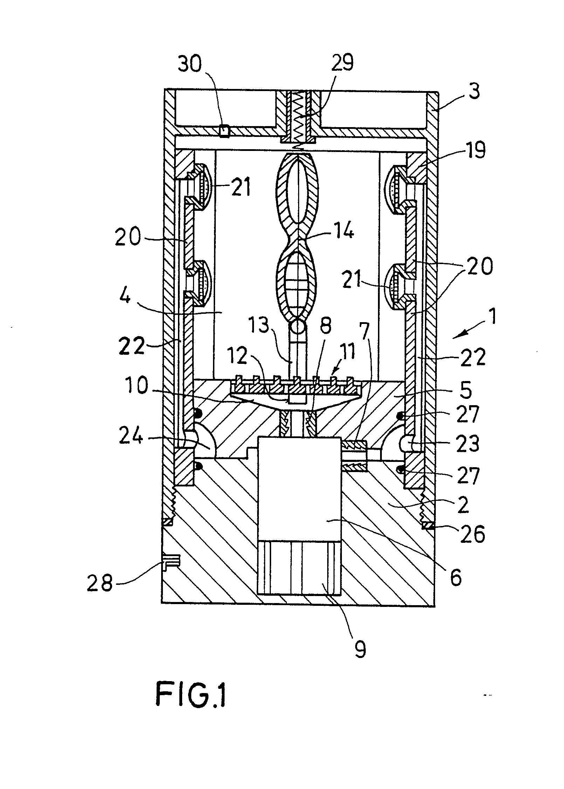

Fig. 1 einen Vertikalschnitt durch eine Vorrichtung gemäß der Erfindung,

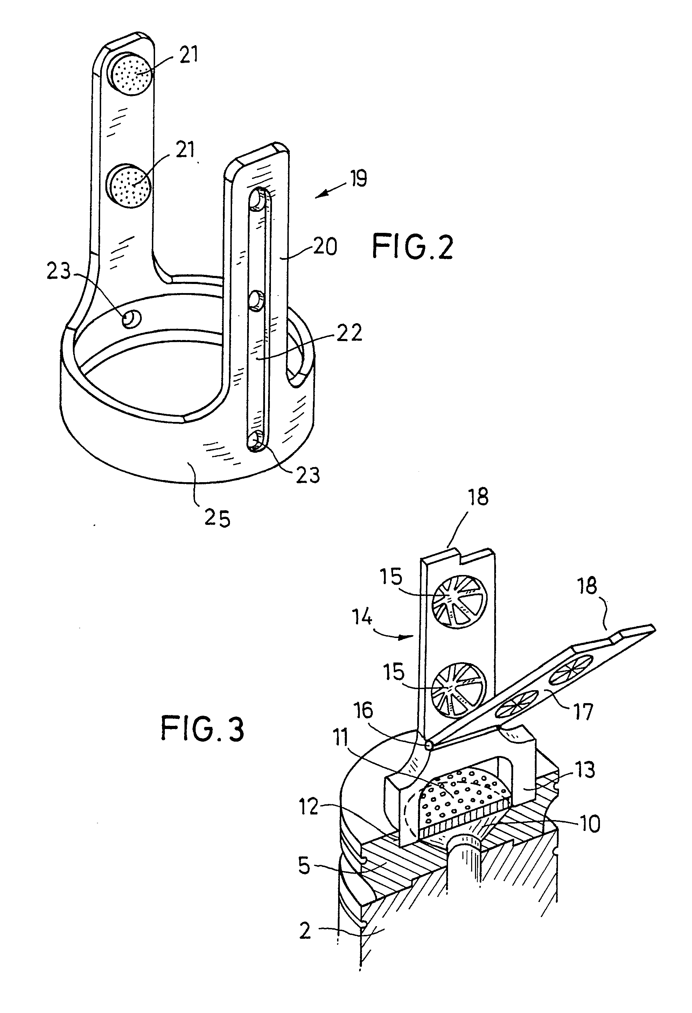

Fig. 2 einen Düsenträger der Vorrichtung gemäß Fig. 1 in perspektivischer Darstellung und in

Fig. 3 einen Teil der Antriebseinheit mit in diese eingesetztem Kontaktlinsenträger in perspektivischer Darstellung.

Die in der Zeichnung dargestellte Vorrichtung weist ein insgesamt mit 1 bezeichnetes zylindrisches Gehäuse auf, mit einem sockelförmigen Unterteil 2 und einem auf dieses schraubbaren Oberteil 3, welch letzteres im wesentlichen einen Behälter 4 für eine Pflegeflüssigkeit bildet, dessen Boden allerdings von einem Teil des sockelartigen Gehäuseunterteils 2 gebildet ist. Zwischen dem Hauptteil des sockelartigen Gehäuseunterteils 2 und einem oberen Sockelteil 5 ist eine Pumpe 6 einsetzbar angeordnet, die einen seitlichen Ausstoßstutzen 7 und einen nach oben gerichteten Ansaugstutzen 8 aufweist. Der Pumpe 6 ist unterhalb ein Elektromotor 9 zugeordnet.

In dem Sockelteil 5 ist oberhalb des Ansaugstutzens 8 ein Einlauftrichter 10 ausgebildet, oberhalb dessen eine Auflagefläche angeordnet ist, die als siebartiger, mit Noppen versehener Boden 11 ausgebildet ist. Beidseits des Einlauftrichters 10 sind im Sockelteil 5 ferner Ausnehmungen 12 ausgebildet, in die die unteren Enden von Schenkeln 13 eines im Fußbereich gabelförmig ausgebildeten Kontaktlinsen trägers 14 einsetzbar sind.

Der Kontaktlinsenträger 14 weist in üblicher Weise Aufnahmekörbchen 15 für zwei nicht dargestellte Kontaktlinsen auf mit einer zugeordneten, um ein Scharnier 16 schwenkbaren Klappe 17 mit den durchbrochenen Körbchen 15 entsprechenden Öffnungen. Die Klappe 17 ist mittels zusammenwirkender Rastteile 18 an dieser und dem Träger 14 arretierbar.

Zwischen Gehäuseunterteil 2 und Gehäuseoberteil 3 ist ferner ein unten ringförmiger Düsenträger 19 angeordnet, an dessen zwei aufrecht stehenden Schenkeln 20 Düsen 21 angeordnet sind, wobei an der Außenseite der aufrecht stehenden Schenkel rinnenförmige Aussparungen 22 ausgebildet sind, die in Verbindung mit der Innenwandung des Behälters 4 bzw. des diesen bildenden Gehäuseoberteils 3 Zuleitungen zu den Düsen 21 bilden, wobei am unteren Ende der rinnenförmigen Aussparungen radial nach innen gerichtete Bohrungen 23 ausgebildet sind, die zu einem umlaufenden Kanal 24 führen, welch letzterer zwischen dem unteren ringförmigen Teil 25 und des Düsenträgers 19 dem Gehäuseunterteil 2 gebildet ist und mit dem Pumpen-Ausstoßstutzen 7 in Verbindung steht.

Zwischen dem Gehäuseunterteil 2 und dem Gehäuseoberteil 3 ist eine Ringdichtung 26 angeordnet und zwischen den Gehäuseunterteilen 2 und 5 und dem Düsenträger 19 jeweils ein O-Dichtring 27. Im Gehäuseunterteil 2 ist ein Stromanschluß 28 für den Motor 9 angedeutet und im Gehäuseoberteil 3 ein Füllventil 29 für eine mittels Spraydose einfüllbare Pflegeflüssigkeit sowie ein flüssigkeitsdichtes Entlüftungsventil 30.

Die Wirkungsweise bzw. Handhabung der beschriebenen Vorrichtung ist wie folgt: Nach dem Abschrauben des Gehäuseoberteils 3 wird die Klappe 17 des Kontaktlinsenträgers 14 geöffnet, die Kontaktlinsen werden in die Körbchen 15 eingelegt und die Klappe 17 wird geschlossen. Dann kann eine Pflegeflüssigkeit in das umgedrehte Gehäuseoberteil 3 bis zu einer bestimmten Markierung eingegeben und das Gehäuseunterteil 2 eingeschraubt werden, nachdem ggf. vorher eine Tablette auf der Auflagefläche 11 zwischen den Schenkeln 13 des Kontaktlinsenträgers 14 eingeklemmt worden ist. Daraufhin kann das Gehäuse wieder um 180° gedreht und der Strom eingeschaltet werden. Alternativ kann die Füllung des Behälters 4 aber auch über das Einfüllventil 29 erfolgen, nachdem das Gehäuseoberteil 3 bereits aufgeschraubt worden ist, wobei dann natürlich das Umdrehen des Gerätes entfällt.

Die Einschaltdauer hängt davon ab, mit welchen Pflegemitteln gearbeitet wird, wobei es grundsätzlich möglich ist, mit zwei getrennten Flüssigkeitsbädern zu arbeiten, d.h. den Behälter zunächst mit einer Reinigungs-und Desinfektionsflüssigkeit zu beschicken und nach Beendigung eines Spritzvorganges mit dieser Flüssigkeit den Behälter zu entleeren und mit einer Neutralisationslösung neu zu befüllen und in Spritzbetrieb zu nehmen. Man kann aber auch von vornherein alle zur Desinfektion bzw. Reinigung und nachfolgenden Neutralision erforderlichen Bestandteile in eine Pflegeflüssigkeit eingeben, wobei durch entsprechende Tabletten-oder Pulverwahl zunächst die Desinfektions-und Reinigungsbestandteile aktiv werden und anschließend die Neutralisationsbestandteile. Die auf die Auflagefläche des Gerätes aufbringbare Pflegetablette kann eine solche sein, welche nur die zur Bildung einer Neutralisationslösung notwendigen Bestandteile aufweist, wobei dann in den Behälter eine Flüssigkeit eingebracht wird, welche die eine Desinfektions-und Reinigungslösung ergebenden Bestandteile bereits wirksam gelöst enthält, wobei die betreffende die Neutralisationslösung bildende Pflegetablette dann so ausgebildet ist, daß sie erst nach einer bestimmten Betriebszeit für das Wirksamwerden der Desinfektions-und Reinigungslösung wirksam bzw. aktiv wird. Man kann allerdings auch eine sogenannte Zwei-Phasen-Pflegetablette auf die Auflagefläche des Geräts aufgeben und dann in den Behälter nur eine Kochsalzlösung oder Wasser, ggf. destilliertes Wasser eingeben, wobei dann die Zwei-Phasen-Pflegetablette derart ausgebildet ist, daß zunächst die eine Desinfektions-und Reinigungslösung ergebenden Anteile in Lösung gehen und nach einer vorbestimmten Zeit die eine Neutralisationslösung ergebenden Anteile.

Natürlich ist die beschriebene Vorrichtung in vielfacher Weise abzuändern bzw. zu ergänzen, ohne den Grundgedanken der Erfindung zu verlassen. So können, wie eingangs schon erwähnt, Heizelemente vorzugsweise im Bereich des Einlauftrichters der Pumpe angeordnet sein, die gleichzeitig oder gesondert mit dem Antriebsmotor einschaltbar sind. Im sockelförmigen unteren Gehäuseteil 2 kann eine Zeitsteuerung für die Pumpe und/oder Heizung angeordnet sein. Ebenso ist eine Kombination mit einem sogenannten Akku-Becher möglich, in den das untere sockelförmige Gehäuseteil 2 unter automatischer Herstellung eines Stromanschlusses zu Pumpe und/oder Heizung einsetzbar ist. Ein solcher Zusatzbecher könnte natürlich auch ein Spezialnetzteil mit zwischengeschaltetem Transformator sein. Ferner können die Düsenöffnungen auch derart ausgebildet sein, daß der Flüssigkeitsstrahl in einem bestimmten Winkel aus der Düse austritt, so daß er im Bezug auf die horizontale Lage der Mündungsöffnung nach links oder rechts oder oben oder unten abweicht und die Kontaktlinse nur noch tangential trifft. Derart austretende Flüssigkeitsstrahlen können zu einer weiteren Verwirbelung des Flüssigkeitsbades beitragen und dgl. mehr.

## Ansprüche

1. Vorrichtung zur Pflegebehandlung von Kontaktlinsen mit einem Behälter zur Aufnahme einer Pflegeflüssigkeit und einem in den Behälter einsetzbaren, die Kontaktlinsen aufnehmenden Kontaktlinsenträger und mit Einrichtungen zur Bewegung der Pflegeflüssigkeit,
dadurch gekennzeichnet,
daß die Einrichtungen zur Bewegung der Pflegeflüssigkeit die im Behälter (4) befindliche Pflegeflüssigkeit gegen die Kontaktlinsen spritzende Düsen (21) aufweisen.

2. Vorrichtung nach Anspruch 1,
dadurch gekennzeichnet,
daß die im Behälter (4) befindliche Pflegeflüssigkeit mit Hilfe einer motorbetriebenen Pumpe (6) umwälzbar und durch die Düsen (21) ausspritzbar ist.

3. Vorrichtung nach Anspruch 1 oder 2,
dadurch gekennzeichnet,
daß sich im Unterteil (2) eines Gehäuses (1) eine aus Pumpe (6) und Motor (9) bestehende Antriebseinheit und im Oberteil (3) des Gehäuses der Behälter (4) zur Aufnahme der Pflegeflüssigkeit befindet.

4. Vorrichtung nach Anspruch 3,
dadurch gekennzeichnet,
daß im Saugbereich der Pumpe (6) eine Auflagefläche (11) für eine Pflegetablette vorgesehen ist.

5. Vorrichtung nach Anspruch 4,
dadurch gekennzeichnet,
daß der Kontaktlinsenträger (14) im Fußbereich gabelförmig ausgestaltet ist und sich oberhalb eines nach oben gerichteten Ansaugstutzens (8) der Pumpe (6) befindet, wobei zwischen den beiden in Ausnehmungen (12) des Gehäuseunterteiles (2) einsetzbaren Schenkeln (13) des Kontaktlinsenträgers (14) die Tabletten-Auflagefläche (11) angeordnet ist.

6. Vorrichtung nach Anspruch 4 oder 5,
dadurch gekennzeichnet,
daß die Tabletten-Auflagefläche von einem siebartigen, mit Noppen versehenen Boden (11) gebildet ist.

7. Vorrichtung nach Anspruch 1 oder einem der folgenden,
dadurch gekennzeichnet,
daß sich im Strom der Pflegeflüssigkeit Heizelemente befinden.

8. Vorrichtung nach Anspruch 7,
dadurch gekennzeichnet,
daß die Heizelemente in einem trichterförmigen Einlaufbereich (10) der Pumpe (6) unterhalb des Noppensiebbodens der Auflagefläche (11) und oberhalb der Pumpe angeordnet sind.

9. Vorrichtung nach Anspruch 1 oder einem der folgenden, dadurch gekennzeichnet, daß die Düsen (21) an aufrecht stehenden Schenkeln (20) eines unten ringförmigen Düsenträgers (19) angeordnet sind, wobei an der Außenseite der aufrecht stehenden Schenkel (20) rinnenförmige Aussparungen (22) ausgebildet sind, die in Verbindung mit der Innenwandung des Behälters (4) Zuleitungen zu den Düsen (21) bilden, wobei am unteren Ende der rinnenförmigen Aussparungen radial nach innen gerichtete Bohrungen (23) ausgebildet sind, die zu einem umlaufenden Kanal (24) führen, in den ein seitlicher Ausstoßstutzen (7) der Pumpe (6) einmündet.

10. Vorrichtung nach Anspruch 9, dadurch gekennzeichnet, daß der umlaufende Kanal (24) zwischen dem unteren ringförmigen Teil (25) des Düsenträgers (19) und einem Sockelteil (5) des Gehäuseunterteils (2) gebildet ist.

11. Vorrichtung nach Anspruch 3 oder einem der folgenden, dadurch gekennzeichnet, daß das Gehäuseunterteil (2) mit der Pumpen-Motor-Einheit (6,9) und das den Behälter (4) bildende Gehäuseoberteil (3) lösbar miteinander verbindbar sind.

12. Vorrichtung nach Anspruch 11, dadurch gekennzeichnet, daß das Gehäuseunterteil (2) und das Gehäuseoberteil (3) durch eine Schraubverbindung miteinander verbindbar sind.

13. Vorrichtung nach Anspruch 3 oder einem der folgenden, dadurch gekennzeichnet, daß im Oberteil (3) des Gehäuses (1) ein Entlüftungsventil (30) vorgesehen ist.

14. Vorrichtung nach Anspruch 3 oder einem der folgenden, dadurch gekennzeichnet, daß im Oberteil (3) des Gehäuses (1) ein Füllventil (29) zum Einbringen von Pflegeflüssigkeit mittels einer Spraydose vorgesehen ist.

15. Vorrichtung nach Anspruch 1 oder einem der folgenden, dadurch gekennzeichnet, daß der Kontaktlinsenträger oder der Düsenträger rotierbar ausgebildet ist.

16. Vorrichtung nach Anspruch 15, dadurch gekennzeichnet, daß am Düsenträger mindestens eine Ringleitung mit ringsum gleichmäßig verteilten, gegen die Kontaktlinsen spritzenden Düsen angeordnet ist.

FIG.1

FIG.2

21

21

23

20

19

22

23

25

FIG.3

18

15

14

15

16

11

17

18

12

13

5

10

2